# EUROPEAN PATENT SPECIFICATION

(11) **EP 2 504 592 B1**
(45) Date of publication and mention of the grant of the patent: **04.11.2020**
(21) Application number: 10833648.8
(22) Date of filing: 24.09.2010
(51) Int. Cl.: F16C 37/00, B22D 15/02, B22D 19/00, F16C 35/00, B22D 31/00, B22C 9/10, B22D 29/00, B22D 11/128, F16C 35/04

(54) **BEARING HOUSING FOR A ROLLING BEARING AND A ROLL LINE FOR A CONTINUOUS CASTING MACHINE INCORPORATING SUCH A ROLLING BEARING HOUSING**
LAGERGEHÄUSE FÜR EIN KUGELLAGER UND ROLLLINIE FÜR EINE DURCHGEHENDE GUSSMASCHINE MIT DEM KUGELLAGERGEHÄUSE
BOÎTIER DE ROULEMENT POUR UN ROULEMENT À BILLES ET CHAÎNE DE ROULAGE POUR UNE MACHINE DE COULÉE EN CONTINU INCORPORANT UN TEL BOÎTIER DE ROULEMENT À BILLES

(30) Priority: 27.11.2009 SE 0901494
(43) Date of publication of application: 03.10.2012
(73) Proprietor: Aktiebolaget SKF, 415 50 Göteborg (SE)
(72) Inventor: MITCHELL, Erik, S-436 51 Hovås (SE); ANUNDSSON, Jesper, S-437 41 Lindome (SE)
(74) Representative: Kuhstrebe, Jochen
(86) International application number: PCT/SE2010/000231
(87) International publication number: WO 2011/065882

(56) References cited:
- WO-A1-2004/065040
- AT-B1- 500 327
- DE-A1- 2 347 892
- DE-A1- 2 347 892
- US-A- 2 352 206
- US-A- 2 584 220
- US-A- 4 883 369
- US-A- 5 915 843
- US-A1- 2007 074 399
- PETRIE ET AL: "Modern porosity sealing and its use in industrial processes", METAL FINISHING, ELSEVIER, NEW YORK, NY, US, vol. 106, no. 1, 1 January 2008 (2008-01-01), pages 34-39, XP022638154, ISSN: 0026-0576, DOI: 10.1016/S0026-0576(08)80007-4 [retrieved on 2008-01-01]
- "IMPREGNATION - IN HOLE STORY", FOUNDRY TRADE JOURNAL, INSTITUTE OF CAST METALS ENGINEERS, WEST BROMWICH, GB, vol. 168, no. 3499, 1 October 1994 (1994-10-01), XP000477944, ISSN: 0015-9042

## Description

### Background of the invention

The present invention refers to a bearing housing for a rolling bearing and particularly a rolling bearing housing having an internal passage for a cooling medium. The invention also refers to a roll line for a continuous casting machine equipped which such rolling bearing housings.

Such bearing housings are usually operating under very hot conditions, for instance, but not exclusively in continuous casting machines, and therefore they require to be subjected to cooling, which is generally effected by means of cooling liquid.

For effecting an efficient cooling of the bearing housing and the bearing supported therein, it is preferred to have a cooling medium passage provided in the goods of the bearing housing.

Such cooling medium passages hitherto have usually been provided with channels drilled or machined in different directions in two-part bearing housings, where the channels communicate with a chamber recessed in the outer part of one bearing housing half, and which chamber is closed off by a cover plate welded to the housing over the chamber. Such bearing housings are described and illustrated e.g. in US-A-5,915,843.

An obvious drawback with such a bearing housing is that the manufacture of the bearing housing is rather expensive, due to the different machining steps and the additional welding of the cover plate to the bearing housing in a fluid-tight manner. It is also important that the welding operation is made in an appropriate manner, which is difficult, and the fact that defective welding seams can cause cracks and leakage, makes it desirable to avoid welding.

US 2 352 206 A discloses an antifriction bearing and a temperature control means for controlling the temperature of the bearing. In one embodiment, a conduit is presented which is cored and cast directly in the material of a backing member.

US 2 584 220 A discloses a bearing member which presents a circulating water compartment which is formed within the casting and has an inlet and an outlet.

PETRIE ET AL: "Modern porosity sealing and its use in industrial processes", METAL FINISHING, ELSEVIER, NEW YORK, NY, US, vol. 106, no. 1, 1 January 2008, pages 34-39, XP022638154, ISSN: 0026-0576 relates to metal castings and powdered metal parts, where it is disclosed that vacuum impregnation has become a critical technology in manufacturing of components for the automotive industry.

"IMPREGNATION - IN HOLE STORY", FOUNDRY TRADE JOURNAL, INSTITUTE OF CAST METALS ENGINEERS, WEST BROMWICH, GB, vol. 168, no. 3499, 1 October 1994, XP000477944, ISSN: 0015-9042 relates to impregnation techniques for castings and where it is stated that porosity is an important quality issue for the castings business.

At 500 327 B1 relates to a rolling contact bearing arrangement for rollers in a continuous casting machine. The rollers are each mounted via two rolling contact bearings, wherein the two central adjacent rolling contact bearings are arranged within the hollows at the inner ends of the rollers. The arrangement presents a spiral-formed cooling system.

DE 2 347 892 A1 discloses a cast bearing shell having a single opening on top of the shell which is used for emptying core material after the casting process, and which opening is closed pressure tight by means of a closure cap.

### Purpose and most essential features of the invention

A primary purpose of the present invention is to provide a bearing housing for a rolling bearing provided with an internal passage with an inlet and an outlet opening for a cooling medium, which avoids the drawbacks of prior art and is less expensive to manufacture, and this has been achieved therein that the bearing housing is a fully cast body with the cooling medium passage fully integrated in the goods of the bearing housing.

Further features of the invention will be disclosed in the dependent claims forming part of the invention.

### Brief description of the drawings

Hereinafter the present invention will be further described with reference to an embodiment illustrated in the accompanying drawings.
Fig. 1 shows in perspective a bearing housing according to the invention.
Fig. 2 is a perspective view from another angle of the bearing housing according to the invention, shown in a partial cross-section.
Fig. 3 shows the bearing housing according to the invention in cross-section, and
Fig. 4 is a partial section along line IV-IV of the bearing housing shown in Fig. 3.

### Brief description of the preferred embodiment

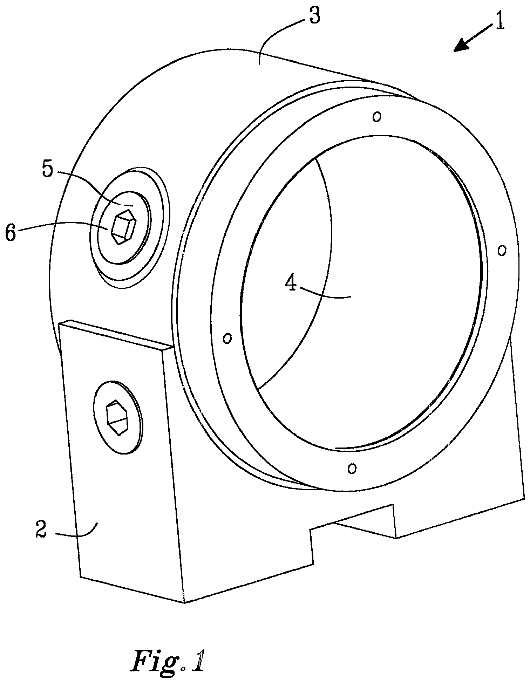

Fig. 1 shows in perspective a bearing housing 1 for a rolling bearing, which is cast in one piece preferably from nodular/ductile iron, which is a rather inexpensive material and which rolling bearing housing incorporates a foot portion 2 integrated with a substantially cylindrical main body 3 forming a cylindrical seat 4 for accommodating a not shown rolling bearing.

The one-piece rolling bearing housing is provided with an internal passage for a cooling medium, preferably cooling liquid, which passage is not visible from the exterior of the bearing housing, but which is situated inside openings 5 sealed off in a liquid-tight manner by means of closure caps 6.

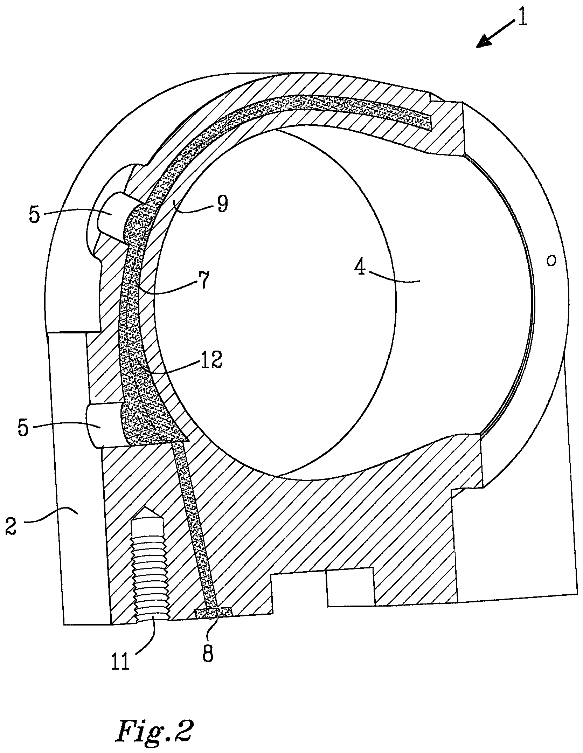

Fig. 2 shows the bearing housing 1 according to Fig. 1 in a somewhat different perspective view, and with a portion of the bearing housing shown in cross-section. From this view can be seen the bottom of the foot portion 2 and how the goods of the bearing housing 1 is equipped with an internal passage 7 extending in arc-form from an inlet opening 8 at the foot portion 2 in close connection to the said cylindrical seat 4 but spaced apart from this by an uninterrupted material layer 9 and which passage 7 (although not visible in this view) communicates with an outlet opening 10 at the foot portion 2.

As it is desirable to let the rolling bearing housing accommodate as big rolling bearings as possible, it is aimed at having a rather thin wall outside the passage 7, and it is preferred if this wall portion is less than 15% of the diameter of the bearing seat 4. A bigger bearing will be able to accommodate larger loads. In an embodiment in continuous casting roll lines, it is crucial to be able to have as large roller bearings as possible and to be able to have a cooling passage 7 surrounding a part of the bearing housing. Such comparatively thin wall sections can be achieved due to use of high precision molding.

The foot portion 2 of the bearing housing 1 has further bottom-holes 11 extending from the exterior of the foot portion 2 a short distance into the material of the bearing housing 1, but separated from the cooling medium passage 7. These bottom-holes 11 serve for attachment of the bearing housing 1 to a supporting structure by means of not shown screws or the like.

The openings 5, which in this stage are not closed by closure caps, are positioned in order to communicate with the passage 7, thus that the interior of the passage 7 can be in contact with the exterior of the bearing housing 1 when the closure caps are removed.

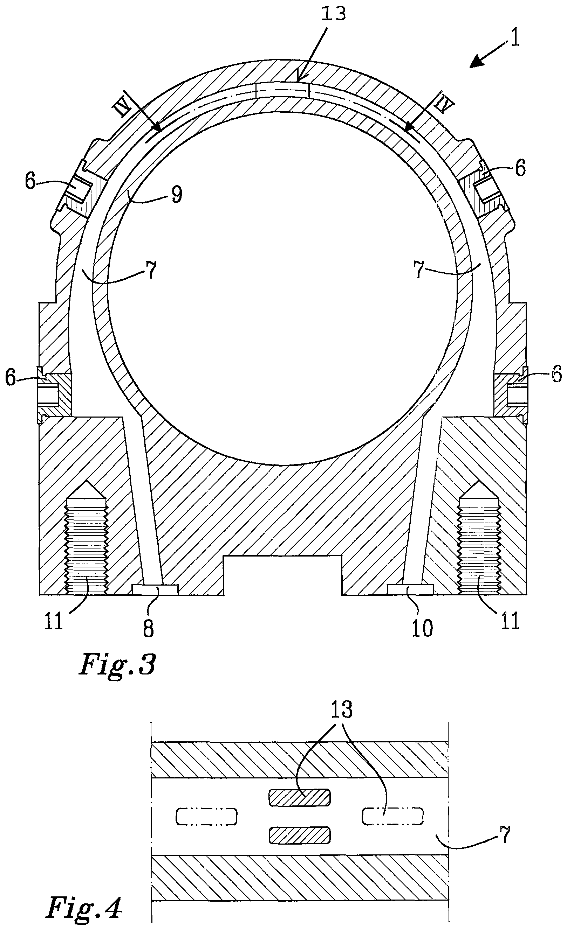

In Fig. 3 is shown a planar side view in cross-section of the bearing housing 1 according to the invention.

It is here shown that the passage 7 extends between the inlet opening 8 and the outlet opening 10 for the cooling medium, and that the passage 7 circumvents a part of the cylindrical bearing seat 4 inside the cylindrical main body 3 of the bearing housing 1. It can also be seen in this view that there, in the embodiment illustrated, are four closed off openings 5 evenly distributed along the passage 7. The openings 5 are here, as in the case according to Fig. 1, closed by closure caps 6 in a medium-tight manner.

In an embodiment, the passage 7 extends around the top part of the rolling bearing housing in close connection to said cylindrical seat 4 but spaced apart from this by an uninterrupted material layer 9, and wherein the internal passage 7 extends at least over more than half the circumference around the top part of the cylindrical bearing seat 4. An advantage with having a casted one-piece bearing housing with an internal passage 7 for cooling fluid is that the risk of leakage from the passage 7 is minimized. In earlier embodiments, including welded cover plates on the bearing housing and split bearing housings, the risk of leakage of cooling fluid was high. Thus, the one-piece bearing housing according to the invention enables the passage 7 to extend over more than half the circumference of the cylindrical bearing seat 4 without passing a split bearing housing plane and/or without being in connection with a cover plate, which can be seen in figure 3.

As it is desired - as earlier mentioned - to have such a thin wall between the passage 7 and the upper part of the rolling bearing housing, on which the heavy slabs or other load is acting, it is possible to provide the passage 7 with one or more internal fins 13, which serve as a reinforcement supporting the outer wall.

In Fig. 4 is shown a section along line IV-IV in Fig. 3, and from this view it can be seen that there might be more than one fin 13, and furthermore these fins can be positioned in different parts of the passage 7, where they also can act for giving a turbulent flow of cooling medium, in order to increase the ability of carrying away as much excessive heat as possible. The shape of the fins can be designed in many different ways. By designing the fins, it is possible to get a different flow of the cooling medium and the strength of the fin may be improved. For instance, in an embodiment not shown in the figures, the fins have an essentially circular cross section.

The bearing housing 1 according to the invention is, as earlier mentioned cast in one piece preferably from nodular/ductile iron, which is a comparatively inexpensive material, and the openings 5 communicating with the passage 7, which forms a cooling medium jacket, are intended for facilitating the manufacture of the casting with the integrated passage 7. With the new inventive bearing housing, there is no need to select a material which is suitable for welding.

For casting a rolling bearing housing with at least one internal cooling passage 7 it is appropriate to use high precision molding, such as shell molding, wax molding or green sand molding. By using such molding methods it is possible to obtain a rolling bearing housing in a tolerance class CT8, as compared to CT10 or CT12 at common molding techniques, and with such high tolerances it is not necessary to let the rolling bearing housing be subjected to finish machining, as it already after molding has a sufficiently high surface finish.

As can be seen in Fig. 2 the passage 7 is filled with a core-forming material 12, such as sand, which is stabilized, in a manner known per se, by a material, which under influence of the increased casting temperature, will degasify and thereby loose its stabilizing effect after the casting has been made.

After the casting has been made the core material can be removed via the openings 5, which are thereupon closed in a fluid-tight manner by means of the closure caps 6. In an embodiment, the closure caps 6 may be fixated to the bearing housing 1 by a threaded connection (not shown in the figures). It shall be noticed that none of the openings 5 are positioned at the upper part of the bearing housing, as this part of the rolling bearing housing will be subjected to load and an adverse, harsh environment, particularly if the rolling bearing housing is used in a roll line for a continuous casting machine, where the upper part of the rolling bearing housing will carry the load of the material slabs conveyed on the roll line, and where the rolling bearing housing is subjected to heat from the slabs, humidity and dirt.

The fact that the bearing housing is a one-piece cast member produced from nodular iron with integrated water jacket formed by the passage 7, and the fact that there will be no welding of protective covers over the passage, means together that the bearing housing in question can be produced at a significantly lower cost than the earlier embodiments with welded covers and/or split bearing housings, and it is neither afflicted with possible product quality problems, mainly cracks and corrosion problems, caused by welding seams. Thus, the service life of the bearing housing will also increase. The nodular iron also creates a passive surface layer, prohibiting housing corrosion. The inventors have realized that even in harsh environments such as in continuous casting, the nodular iron will create a passive surface layer.

As the molded goods might have a certain porosity, at least the outer surface of the rolling bearing housing 1 is preferably equipped with an impregnation for sealing off any pores appearing after the casting process. It is preferred that the impregnation is anyone of a polymer and a resin.

The nodular/ductile iron can be substituted e.g. by martensitic steel, which however is a more expensive material than the nodular/ductile iron. An advantage of the present invention is that there is an increased freedom when choosing appropriate housing materials, due to the fact that the selected material does not need to be suited for welding.

As mentioned in the introductory part of the description, a rolling bearing housing of the type described and defined in the accompanying claims, although useful in many applications, is particularly well suited for use in any type of roll line of a continuous casting machine, and the application therefore also incorporates a claim directed to a roll line for a continuous casting machine, equipped with bearing housings as claimed in the previous claims. The inventive bearing housing has a combination of features which makes the bearing housing well suited for a continuous caster environment, which is characterized by lack of available space, high loads and a harsh environment including very high temperatures and different surrounding chemicals.

The invention is not limited to the embodiment shown in the accompanying drawings and described with reference thereto, but variants and modifications are possible within the scope of the appended claims.

## Claims

1. A bearing housing (1) for a rolling bearing provided with at least one internal passage (7) with an inlet opening (8) and an outlet opening (10) for a cooling medium, wherein the rolling bearing housing (1) is a fully cast body with the cooling medium passage (7) fully integrated in the goods of the bearing housing, **characterized in that** the at least one internal passage (7) has a number of further openings (5), which are used for emptying core material (12) after the casting process, and which further openings (5) are closed off by means of fluid-tight closure caps (6), wherein the further openings (5) are positioned in other parts of the bearing housing than the top part thereof.

2. A rolling bearing housing (1) as claimed in claim 1, wherein the bearing housing (1) is cast in one piece from a nodular/ductile iron.

3. A rolling bearing housing (1) as claimed in claim 1, wherein the bearing housing (1) is cast in one piece from a martensitic steel.

4. A rolling bearing housing (1) as claimed in anyone of claims 1 to 3, wherein at least the outer surface of the bearing housing (1) is equipped with an impregnation for sealing off any pores appearing after the casting process.

5. A rolling bearing housing (1) as claimed in claim 4, wherein the impregnation is anyone of a polymer and a resin.

6. A rolling bearing housing (1) as claimed in anyone of the preceding claims, wherein there is provided at least one stabilizing fin (13) in the cooling medium passage (7).

7. A rolling bearing housing (1) as claimed in anyone of the preceding claims, wherein the thickness of the material in the bearing housing wall outside the cooling medium passage (7) at the uppermost portion of the bearing housing is less than 15% of the diameter of a bearing seat (4) arranged inside the bearing housing (1) for accommodating a rolling bearing.

8. A rolling bearing housing as claimed in claims 6 and 7, wherein said at least one stabilizing fin (13) is provided in the top part of the cooling medium passage (7) for reinforcing the outer wall of the cooling medium passage (7) against deformation caused by load acting on the top part of the roller bearing housing.

9. A rolling bearing housing (1) having an internal cylindrical seat (4) for accommodating a bearing and as claimed in anyone of the preceding claims, wherein the internal passage (7) extends in arc form around the top part of the rolling bearing housing and in close connection to said cylindrical seat (4) but spaced apart from this by an uninterrupted material layer (9), and wherein the internal passage (7) extends at least over more than half the circumference around the top part of the cylindrical bearing seat (4).

10. A rolling bearing housing (1) as claimed in claim 9, wherein the internal passage (7) extends in arc-form around the top part of the rolling bearing housing from an inlet opening (8) at a foot portion (2) of the bearing housing to an outlet opening (10) at a foot portion (2) of the bearing housing.

11. A roll line for a continuous casting machine, characterized therein that it incorporates at least one bearing housing as claimed in anyone of claims 1 to 10.

## Patentansprüche

1. Lagergehäuse (1) für ein Wälzlager, das mit mindestens einem inneren Kanal (7) mit einer Einlassöffnung (8) und einer Auslassöffnung (10) für ein Kühlmedium versehen ist, wobei das Wälzlagergehäuse (1) ein Vollgusskörper mit dem in dem Lagergehäuseartikel vollständig integrierten Kühlmediumkanal (7) ist, **dadurch gekennzeichnet, dass** der mindestens eine innere Kanal (7) eine Anzahl von weiteren Öffnungen (5) hat, die dazu verwendet werden, Kernmaterial (12) nach dem Gießvorgang zu entleeren, und wobei die weiteren Öffnungen (5) mittels fluiddichter Verschlusskappen (6) verschlossen sind, wobei die weiteren Öffnungen (5) in anderen Teilen des Lagergehäuses als seinem oberen Teil positioniert sind.

2. Wälzlagergehäuse (1) nach Anspruch 1, wobei das Lagergehäuse (1) aus einem Sphäroguss/duktilem Gusseisen einstückig gegossen ist.

3. Wälzlagergehäuse (1) nach Anspruch 1, wobei das Lagergehäuse (1) aus einem martensitischen Stahl einstückig gegossen ist.

4. Wälzlagergehäuse (1) nach einem der Ansprüche 1 bis 3, wobei mindestens die Außenfläche des Lagergehäuses (1) mit einer Imprägnierung zum Abdichten jeglicher Poren, die nach dem Gießvorgang erscheinen, ausgestattet ist.

5. Wälzlagergehäuse (1) nach Anspruch 4, wobei die Imprägnierung eine von einem Polymer und einem Harz ist.

6. Wälzlagergehäuse (1) nach einem der vorhergehenden Ansprüche, wobei mindestens eine Stabilisierungsrippe (13) in dem Kühlmediumkanal (7) vorgesehen ist.

7. Wälzlagergehäuse (1) nach einem der vorhergehenden Ansprüche, wobei die Dicke des Materials der Lagergehäusewand außerhalb des Kühlmediumkanals (7) an dem obersten Teil des Lagergehäuses kleiner als 15% des Durchmessers eines Lagersitzes (4) ist, der innerhalb des Lagergehäuses (1) zur Aufnahme eines Wälzlagers angeordnet ist.

8. Wälzlagergehäuse (1) nach den Ansprüchen 6 und 7, wobei die mindestens eine Stabilisierungsrippe (13) im oberen Teil des Kühlmediumkanals (7) zum Verstärken der Außenwand des Kühlmediumkanals (7) gegen eine durch auf den oberen Teil des Wälzlagergehäuses einwirkende Last verursachte Verformung vorgesehen ist.

9. Wälzlagergehäuse (1), das einen inneren zylindrischen Sitz (4) zur Aufnahme eines Lagers hat, und nach einem der vorhergehenden Ansprüche, wobei sich der innere Kanal (7) in Bogenform um den oberen Teil des Wälzlagergehäuses und in enger Verbindung mit dem zylindrischen Sitz (4), aber durch eine ununterbrochene Materialschicht (9) davon beabstandet, erstreckt, und wobei sich der inneren Kanal (7) mindestens über mehr als die Hälfte des Umfangs um den oberen Teil des zylindrischen Lagersitzes (4) erstreckt.

10. Wälzlagergehäuse (1) nach Anspruch 9, wobei sich der innere Kanal (7) in Bogenform um den oberen Teil des Wälzlagergehäuses von einer Einlassöffnung (8) am Fußteil (2) des Lagergehäuses bis zu einer Auslassöffnung (10) an einem Fußteil (2) des Lagergehäuses erstreckt.

11. Walzlinie für eine Stranggussmaschine, **dadurch gekennzeichnet, dass** sie mindestens ein Lagergehäuse nach einem der Ansprüche 1 bis 10 enthält.

## Revendications

1. Logement de palier (1) pour un roulement à rouleaux pourvu d'au moins un passage interne (7) avec une ouverture d'entrée (8) et une ouverture de sortie (10) pour un milieu de refroidissement, le logement de palier à rouleaux (1) étant un corps entièrement coulé dont le passage de milieu de refroidissement (7) est entièrement intégré dans les matières du logement de palier, **caractérisé en ce que** l'au moins un passage interne (7) présente un certain nombre d'ouvertures supplémentaires (5) qui sont utilisées pour vider le matériau de noyau (12) après le processus de coulée, et lesquelles ouvertures supplémentaires (5) sont fermées au moyen de capuchons de fermeture étanches aux fluides (6), les ouvertures supplémentaires (5) étant positionnées dans d'autres parties du logement de palier que la partie supérieure de celui-ci.

2. Logement de palier à rouleaux (1) selon la revendication 1, le logement de palier (1) étant coulé d'une seule pièce à partir de fer nodulaire ou de fonte ductile.

3. Logement de palier à rouleaux (1) selon la revendication 1, le logement de palier (1) étant coulé d'une seule pièce à partir d'un acier martensitique.

4. Logement de palier à rouleaux (1) selon l'une quelconque des revendications 1 à 3, au moins la surface extérieure du logement de palier (1) étant équipée d'une imprégnation pour sceller les pores éventuels apparaissant après le processus de coulée.

5. Logement de palier à rouleaux (1) selon la revendication 4, l'imprégnation étant constituée soit par un polymère soit par une résine.

6. Logement de palier à rouleaux (1) selon l'une quelconque des revendications précédentes, au moins une ailette de stabilisation (13) étant prévue dans le passage de milieu de refroidissement (7).

7. Logement de palier à rouleaux (1) selon l'une quelconque des revendications précédentes, l'épaisseur du matériau dans la paroi du logement de palier à l'extérieur du passage de milieu de refroidissement (7) au niveau de la portion la plus supérieure du logement de palier étant inférieure à 15 % du diamètre d'un siège de palier (4) agencé à l'intérieur du logement de palier (1) pour recevoir un palier à rouleaux.

8. Logement de palier à rouleaux selon les revendications 6 et 7, ladite au moins une ailette de stabilisation (13) étant prévue dans la partie supérieure du passage de milieu de refroidissement (7) pour renforcer la paroi extérieure du passage de milieu de refroidissement (7) à l'encontre d'une déformation causée par une charge agissant sur la partie supérieure du logement de palier à rouleaux.

9. Logement de palier à rouleaux (1) ayant un siège cylindrique interne (4) pour recevoir un palier et selon l'une quelconque des revendications précédentes, le passage interne (7) s'étendant en forme d'arc autour de la partie supérieure du logement de palier à rouleaux et de manière étroitement connectée audit siège cylindrique (4) mais de manière espacée de celui-ci par une couche de matériau ininterrompue (9), et le passage interne (7) s'étendant au moins sur plus de la moitié de la circonférence autour de la partie supérieure du siège de palier cylindrique (4).

10. Logement de palier à rouleaux (1) selon la revendication 9, le passage interne (7) s'étendant en forme d'arc autour de la partie supérieure du logement de palier à rouleaux depuis une ouverture d'entrée (8) au niveau d'une portion de base (2) du logement de palier jusqu'à une ouverture de sortie (10) au niveau d'une portion de base (2) du logement de palier.

11. Ligne de roulage pour une machine à coulée continue, **caractérisée en ce qu'**elle incorpore au moins un logement de palier selon l'une quelconque des revendications 1 à 10.
